# EUROPÄISCHE PATENTSCHRIFT

(11) **EP 2 329 139 B1**
(45) Veröffentlichungstag und Bekanntmachung des Hinweises auf die Patenterteilung: **16.04.2014**
(21) Anmeldenummer: 09741201.9
(22) Anmeldetag: 11.09.2009
(51) Int. Cl.: F03D 1/06, B29C 70/30

(54) **ROTORBLATT MIT EINEM GURT MIT EINER IN LÄNGSRICHTUNG ABNEHMENDEN BREITE, VERFAHREN ZUR HERSTELLUNG DES ROTORBLATTES UND VERLEGEHILFE FÜR GELEGEBÄNDER DES GURTES**
ROTOR BLADE COMPRISING A FLANGE TAPERING OFF IN THE LONGITUDINAL DIRECTION, METHOD FOR PRODUCING THE ROTOR BLADE, AND LAYING ASSISTANCE DEVICE FOR THE POSITIONING STRIPS OF THE FLANGE
PALE DE ROTOR COMPORTANT UNE MEMBRURE DONT LA LARGEUR DIMINUE DANS LA DIRECTION LONGITUDINALE, PROCÉDÉ DE FABRICATION DE LA PALE DE ROTOR ET DISPOSITIF D'AIDE À LA POSE DE BANDES DE GRILLE DE LA MEMBRURE

(30) Priorität: 25.09.2008 DE 102008049016
(43) Veröffentlichungstag der Anmeldung: 08.06.2011
(73) Patentinhaber: Senvion SE, 22297 Hamburg (DE)
(72) Erfinder: SCHUBERT, Matthias, 24768 Rendsburg (DE)
(74) Vertreter: Groth, Wieland
(86) Internationale Anmeldenummer: PCT/DE2009/001271
(87) Internationale Veröffentlichungsnummer: WO 2010/034283

(56) Entgegenhaltungen:
- WO-A1-03/008800
- WO-A2-2009/095175
- DE-A1- 10 336 461
- DE-A1-102007 036 917
- DE-U1- 20 320 714
- JP-A- 2007 255 366
- US-A- 4 137 007
- US-A1- 2007 189 902

## Beschreibung

Die Erfindung betrifft ein Rotorblatt für eine Windenergieanlage mit wenigstens einem in einer Längsrichtung von einer Rotorblattwurzel zu einer Rotorblattspitze hin verlaufenden Gurt und ein Verfahren zur Herstellung des Rotorblattes.

Im Stand der Technik sind Rotorblätter mit Stegen hinlänglich bekannt. Die Rotorblätter moderner Windenergieanlagen weisen Längen von 60 Metern und mehr auf. Die Rotorblätter können dabei, insbesondere im Abschnitt der Rotorblattwurzel, Durchmesser von mehreren Metern haben. Problematisch bei so langen und im Wesentlichen hohlen Rotorblättern ist die Erzielung einer hinreichenden Beulsteifigkeit. Zur Erhöhung der Beulsteifigkeit der Rotorblätter werden Gurte in Längsrichtung innen entlang der Rotorblattinnenwandung der Ober- und Unterschale aufgebracht. Darüber hinaus werden Stege in Längsrichtung senkrecht abstehend von den sich im Rotorblattinnenraum vorzugsweise gegenüberliegenden Gurten montiert. Die Gurte und Stege sind selber wiederum beulgefährdet.

Die Gurte werden üblicherweise aus Gelegebändern konstanter Breite im Laminierverfahren hergestellt. Dabei können die Gurte von der Rotorblattwurzel zur Rotorblattspitze hin durch schrittweises Beenden von Gelegebändern zunehmend dünner ausgebildet ein. An der Rotorblattwurzel ergeben sich dadurch hohe Gurtdicken mit hoher Beulsteifigkeit und in Richtung Rotorblattspitzen nimmt die Dicke der Gurte stetig ab, wodurch ihre Beulsteifigkeit ebenfalls abnimmt.

Zur Erzielung einer hohen Effektivität sind die Gurte breit ausgebildet. Das führt jedoch dazu, dass die Gurte zum einen nicht bis in die äußerste Rotorblattspitze verlegbar sind und zum anderen wird viel Material zur Herstellung der Gurtbänder benötigt.

Aus dem nachveröffentlichten Stand der Technik WO 2009/095175 A2 ist ein Rotorblatt für Windenergieanlagen bekannt, bei dem ein Gurt aus mehreren nebenbeneinander verlaufenden Faserbändern gebildet wird, wobei die einzelnen Faserbänder eine unterschiedliche Länge in Rotorblattlängsrichtung aufweisen.

In der US 4,137,007 ist ein Rotorblatt bekannt, mit einem zu einer Rotorblattspitze hin dünner werdenden Gurt.

Aus der US 2007/0189902 A1 ist ein Rotorblatt mit einem Gurt bekannt, dessen Breite in Längsrichtung des Rotorblattes hin ebenfalls abnimmt. Dabei ist der Gurt aus Carbonfasern und E-Glasfilamenten mit infundiertem Harz aufgebaut.

Es ist daher Aufgabe der Erfindung, ein Rotorblatt zur Verfügung zu stellen, das eine hinreichende Beulsteifigkeit aufweist und dennoch mit geringerem Materialaufwand herstellbar ist. Es ist hinsichtlich des Verfahrens Aufgabe der Erfindung, ein Herstellungsverfahren für ein derartiges Rotorblatt zur Verfügung zu stellen.

Hinsichtlich des Rotorblattes wird die Aufgabe durch ein eingangs genanntes Rotorblatt gelöst, mit wenigstens einem Gurt, dessen Breite erfindungsgemäß entlang der Längsrichtung abnimmt. Aufgrund der erfindungsgemäßen Breitenabnahme kann sich der Gurt weit in die Rotorblattspitze hinein erstrecken und zu seiner Herstellung wird weniger Material benötigt.

Die Gurte erhöhen die Beulfestigkeit des Rotorbittes. Vorzugsweise sich im Rotorblattinnenraum gegenüberliegende Gurte sind mit wenigstens einem vorzugsweise von beiden Gurten senkrecht abstehenden Steg miteinander fest verbunden.

Unter Längsrichtung wird hier eine Richtung von der Rotorblattwurzel zur Rotorblattspitze hin verstanden. Zwischen einer Längsrichtung des Gurtes, der Rotorblatthalbschale oder des Rotorblattes wird im Weiteren nicht unterschieden. Sie sollen hier als zusammenfallend angesehen werden.

Unter der Breite des Gurtes wird im Folgenden die Ausdehnung des Gurtes quer zur Längsrichtung, vorzugsweise senkrecht zur Längsrichtung verstanden. Unter Querrichtung wir ebenfalls eine Richtung quer zur Längsrichtung, vorzugsweise senkrecht zur Längsrichtung, verstanden.

Erfahrungsgemäß sind Rotorblattblätter insbesondere im Bereich der Rotorblattwurzel beulgefährdet. Zur Erhöhung der Beulsteifigkeit sind daher besonders breite Gurte entlang der inneren Rotorblattabschnitte notwendig. Unter ,außen' und ,innen' wird hier und im Folgenden die Position des Rotorblattabschnittes oder des jeweils beschriebenen Bauteils in Bezug auf die Windenergieanlage im montierten Zustand bezeichnet. Das heißt, die äußeren Rotorblattabschnitte sind im Bereich der Rotorblattspitze und die inneren Rotorblattabschnitte sind im Bereich der Rotorblattwurzel angeordnet.

Grundsätzlich ist es denkbar, die Gurtbreite auf unterschiedliche Weise in Richtung der Rotorblattspitze abnehmen zu lassen. Vorzugswiese nimmt die Gurtbreite stufenweise ab. Die Stufen sind vorzugsweise in Querrichtung verlaufende Querstufen. Die Querstufen können in Längsrichtung über einen längeren Rotorblattabschnitt bzw. Gurtabschnitt verteilt sein. Der Abschnitt kann eine Länge aufweisen, die wenigstens der halben Rotorblattlänge entspricht. Die Querstufen können aber auch über 70%, 80% oder mehr der Rotorblattlänge verteilt sein.

Der wenigstens eine Gurt ist vorzugsweise aus übereinander gelegten Gelegebändern im Laminierverfahren hergestellt. Bei der Gurtherstellung wird ausgehend von der Rotorblattwurzel eine Vielzahl von Gelegebändern übereinander gelegt. Gelegebänder können untereinander verschieden aufgebaut sein. Es kann sich um Gewebebänder Glasfaserbänder, mit in Längsrichtung ausgerichteten Glasfasern oder ähnlichem handeln.

Die Länge der Gelegebänder kann in Längsrichtung unterschiedlich sein, so dass im gleichen Querschnitt an der Rotorblattwurzel beginnende Gelegebänder in verschiedenen Abschnitten in Längsrichtung des Rotorblattes enden. In den jeweiligen Abschnitten wird der Gurt um die Dicke des in dem Abschnitt endenden Gelegebandes stufenartig dünner. Der Gurt kann so in mehreren Stufen entlang seiner Längsrichtung in seiner Gurtdicke reduziert werden. Vorzugsweise beginnen alle Gelegebänder im gleichen Querschnitt an der Rotorblattwurzel. Erfindungsgemäß sollten die Gelegebänder in ihrer Breite umso schmaler ausgebildet sind, je länger sie in Längsrichtung von der Rotorblattwurzel abgehen. Grundsätzlich können verschiedene Gelegebänder auch in unterschiedlichen Entfernungen von der Rotorblattwurzel beginnen und von dort in Längsrichtung verlaufen.

Erfindungsgemäß sind außenseitige Gelegebänder eines Gurtes kürzer als innenseitige Gelegebänder des Gurtes. Unter ,außenseitig' und 'innenseitig' werden hier und im Folgenden Richtungen entlang des Querschnittes des Rotorblattes verstanden. ,Außenseitig' gibt eine Richtung zur Rotorblattwandung und 'innenseitig' eine Richtung in den Rotorblattinnenraum an.

Daher laufen außenseitige Gelegebänder ausgehend von der Rotorblattwurzel zuerst aus und die innenseitigen Gelegebänder laufen über durch die Beendigung der außenseitigen Gelegebänder erzeugten Querstufen hinaus in Richtung der Rotorblattspitze. Querstufen verlaufen vorzugsweise geradlinig in Querrichtung.

Günstigerweise ist in Richtung des Rotorblattinnenraumes jedes innenseitig eines außenseitigen Gelegebandes benachbarte Gelegeband länger als das außenseitige Gelegeband. In dieser bevorzugten Ausführungsform der Erfindung werden die außenseitigen Gelegebänder sukzessive in Richtung der Rotorblattspitze hin beendet und bilden bei jeder Beendigung eine Querstufe aus, über die die innenseitigen Gelegebänder herübergeführt sind.

Die beschriebenen Ausführungsformen der Erfindung ermöglichen es, die Gurte von der Rotorblattwurzel zur Rotorblattspitze hin auch zu verdünnen.

Vorzugsweise nimmt die Gurtbreite in Längsrichtung kontinuierlich ab. Dazu ist es denkbar, die einzelnen übereinander liegenden Gelegebänder konisch zur Rotorblattspitze hin zu verjüngen, so dass sich der Gurt insgesamt zur Rotorblattspitze hin verjüngt.

In einer bevorzugten Weiterbildung der Erfindung sind die Gelegebänder in ihrer Breite voneinander verschieden. Dabei können einzelne Gelegebänder oder alle Gelegebänder über ihre jeweilige Längsausdehnung eine gleich bleibende Breite aufweisen. Vorzugsweise enden die breitesten Gelegebänder, ausgehend von der Rotorblattwurzel in Richtung der Rotorblattspitze zuerst, während schmalere Gelegebänder an in Längsrichtung weiter entfernten Stellen des Rotorblattes enden. Durch diese Ausformung der Gelegebänder ist es möglich, den Gurt insgesamt in Längsrichtung schmaler werden zu lassen. Die Gurtbreite nimmt stufenartig ab, wobei die gestufte Breitenabnahme im jeweils selben Querschnitt erfolgt, in dem eine durch die Beendigung des Gelegebandes erzeugte zugeordnete Querstufe verläuft.

Vorzugsweise alle Gelegebänder weisen günstigerweise entlang ihrer gesamten Längsausdehnung eine jeweils konstante Breite auf. Es ist aber auch denkbar, dass die Breite des Gelegebandes selbst variiert, insbesondere dass sie in Längsrichtung abnimmt. Vorzugsweise wird die Verringerung der Breite des Gurtes aber durch Schichtung unterschiedlich länger und breiter Gelegebänder erreicht, wobei jedes einzelne Gelegeband eine konstante Breite entlang seiner Längsausdehnung aufweist.

Vorzugsweise sind außenseitige Gelegebänder breiter als innenseitige Gelegebänder des Gurtes. In einer besonders bevorzugten Ausführungsform der Erfindung ist jedes innenseitig einem außenseitigen Gelegeband benachbarte Gelegeband schmaler als das außenseitige Gelegeband. Der Gurt nimmt in dieser Ausführungsform eine im Querschnitt pyramidenartige Form an.

Aufgrund der unterschiedlichen Breite der Gelegebänder bilden sich zwischen den Gelegebändern in Längsrichtung Längsstufen aus. Die Längsstufen weisen eine der Dicke des schmaleren, innenseitigen Gelegebandes entsprechende Stufenhöhe auf. Zur Glättung der Längsstufen können in keilförmige in Längsrichtung verlaufende Abschlüsse in die Längsstufe eingeformt sein. Dabei kann es sich um keilförmige Balsaholzleisten oder - stücke handeln, die seitlich an das innenseitige schmalere Gelegeband angelegt werden und auf das außenseitige breitere Gelegeband aufgeklebt oder auflaminiert werden.

Die Glättung kann für jede der Längsstufen vorgenommen werden. Durch Überlaminieren der Gelegebänder, einschließlich der längs verlaufenden Keile, entsteht ein Hauptgurt mit einer weitgehend ebenen und geraden Innenfläche, die als gerade Trittfläche für Wartungsarbeiten dienen kann. Dazu wir die Breite und Dicke der einzelnen Gelegebänder der Krümmung des Rotorblattquerschnitts angepasst, so dass die Gelegebänder seitlich etwa alle in der Trittflächenebene enden.

In einer weiteren bevorzugten Ausführungsform der Erfindung werden die Querstufen durch quer verlaufende ebenfalls keilförmige Abschlusse geglättet.

Problematisch an den Querstufen ist insbesondere, dass die innenseitigen Gelegebänder nur unter Bildung von Hohlräumen über die Querstufe auf die benachbarten außenseitigen Gelegebänder überführbar wären. Der Gurt wäre in den Abschnitten der Querstufen einer erhöhten Beulgefahr ausgesetzt. Erfindungsgemäß werden die Hohlräume vor den Querstufen durch quer verlaufende Abschlusstücke ausgefüllt.

Vorzugsweise laufen die Gelegebänder in Längsrichtung in einer geraden Kante in Querrichtung aus. Die Kante bildet so eine gerade Querstufe aus. Die Querstufe wird erfindungsgemäß durch vorzugsweise ein quer verlaufendes Abschlussstück in Form eines Keilstückes geglättet. Die quer verlaufenden Keilstücke sind vorzugsweise spitzer als die längs verlaufenden Keilstücke. Das quer verlaufende Keilstück ist in die zugeordnete Querstufe passgenau eingeformt. Es ist an das beendete außenseitige Gelegeband angepasst und überführt eine Innenfläche des Gelegebandes in einer Schräge mit sehr geringer Steigung, von vorzugsweise wenigen Grad, stetig auf eine Innenseite des benachbarten außenseitige Gelegeband bzw. auf die Innenwandung der Rotorblatthalbschale.

Über die so geglättete Querstufe kann das benachbarte innenseitige Gelegeband geführt werden, ohne dass es einer erhöhten Beulgefahr ausgesetzt ist.

Vorzugsweise sind die keilförmigen quer verlaufenden Abschlussstücke ebenfalls aus Balsaholz ausgeformt. Balsaholz ist in der Verarbeitung einfach und kann insbesondere im Laminierverfahren fest in die Laminierschichten eingebunden werden.

Die längs und/oder quer verlaufenden Abschlusstücke können aber verschiedenste Formen aufweisen, insbesondere kann sich ein keilförmiger Querschnitt in Seitenlänge und/oder Winkeln entlang der jeweiligen Längsausdehnung des Abschlussstückes verändern.

In Kombination mit der vorne beschriebenen Ausführungsform, außenseitige Gelegebänder in Längsrichtung zuerst zu beenden, ist es möglich die Gurte in Längsrichtung sukzessive zugleich schmaler und dünner werden zu lassen.

Unter Gurt kann ein Hauptgurt aber auch ein Nebengut verstanden werden. Die Erfindung ist auch auf Haupt- und Nebengurte desselben Rotorblattes anwendbar.

Hinsichtlich des Verfahrens wird die Aufgabe dadurch gelöst, dass ein Gurt mit in Längsrichtung abnehmender Breite auf eine Rotorblattinnenwandung aufgebracht wird.

Das Verfahren ist auch auf Haupt- und/oder Nebengurte anwendbar.

Vorzugsweise werden Gelegebänder mit unterschiedlichen Breiten und Längen übereinander geschichtet. Die Gelegebänder mit unterschiedlicher Länge werden derart gewählt, dass je länger die Gelegebänder ausgehend von der Rotorblattwurzel in Längsrichtung sind, desto kleiner wird ihre durchschnittliche, vorzugsweise konstante Breite gewählt. Die Schichtreihenfolge kann beliebig gewählt werden, um eine Breitenabnahme des zugehörigen Gurts zu erzielen.

Günstigerweise werden zunächst außenseitig kurze und breite Gelegebänder auf die Innenwandung der Rotorblatthalbschale gelegt und darauf innenseitig schmalere und längere Gelegebänder aufgelegt, bis der vollständige Schichtaufbau erlangt wird. Die Gelegebänder werden dann überlaminiert.

Vorzugsweise werden sukzessive kurze breite Gelegebänder außenseitig, vorzugsweise auf die Rotorblattinnwandung aufgelegt und innenseitig benachbart längere und schmalere Gelegebänder auf das außenseitige Gelegeband gelegt. Es ist jedoch auch denkbar, dass aufeinander folgende Gelegebänder nicht notwendigerweise innenseitig immer länger und schmaler werden, sondern es ist auch möglich, dass innenseitige Gelegebänder kürzer als benachbarte außenseitige Gelegebänder sind oder innenseitige Gelegebänder breiter als benachbarte außenseitige Gelegebänder sind. Es sollten jedoch die breitesten Gelegebänder in Längsrichtung zuerst beendet und die nächst breitesten Gelegebänder als zweites beendet werden usw., so dass am Ende nur noch ein Gelegeband oder wenige Gelegebänder mit der schmalsten Breite in der Rotorblattspitze übrig bleiben. Es ist im Übrigen auch denkbar, dass mehrere Gelegebänder die gleiche Länge und/oder Breite aufweisen und zur Herstellung des Rotorblattes verwendet werden.

In einer bevorzugten Ausführungsform der Erfindung bilden die Enden der in Längsrichtung endenden Gelegebänder Querstufen aus, an die keilförmige Anschlusstücke angelegt werden und innenseitig kann über die beendeten Gelegebänder und das keilförmige Abschlussstück ein benachbartes Gelegeband gelegt werden.

Bei dieser bevorzugten Ausführungsform der Erfindung wird ein breites Gelegeband beendet, vorzugsweise in einer senkrecht zur Längsrichtung geraden Linie und an die sich durch die Beendigung des Gelegebandes ausbildende Stufe wird ein quer verlaufender Abschluss angeformt, der die Gelegebandebene kontinuierlich auf das Gelegeband, das außenseitig benachbart ist, überführt. Im anschließenden Laminierverfahren werden das außenseitige Gelegeband und der Abschluss überlaminiert und damit fest in die Gurtschichtung eingebunden.

Günstigerweise werden vorzugsweise seitliche am Gurt in Längsrichtung durch die unterschiedliche Breite der einzelnen Gelegebänder ausgeformten Längsstufen durch in Längsrichtung verlaufende Anschlüsse geglättet. Die seitlichen Anschlüsse können sich über die gesamte Länge des Gelegebandes, das auf gleicher Höhe angeordnet ist, erstrecken.

Auch die in Längsrichtung verlaufenden seitlichen Anschlüsse werden mit den Gelegebänder im Laminierverfahren überlaminiert.

Die in Querrichtung und die in Längsrichtung verlaufenden Anschlusstücke können in einem Querschnitt keilförmig ausgeformt sein. Sie können Balsaholz aufweisen oder auf vollständig daraus bestehen. Die Steigung der seitlichen Anschlussstücke sowie die Breite der Gelegebänder ist dabei vorzugsweise so gewählt, dass der überlaminierte Gurt im Innenraum des Rotorblattes eine möglichst ebene und gerade Fläche ausbildet.

Die erfindungsgemäß hergestellten Haupt- und/oder Nebengurte sind im Querschnitt nicht mehr an jeder Stelle gleich breit, sondern im Querschnitt an ihren äußeren Enden sind die Gurte schmaler als im Querschnitt im mittleren Bereich. Dadurch wird zum einen Material gespart und die Beulsteifigkeit der Gurte bleibt trotzdem hinreichend hoch, da die Belastung der Gurte an den seitlichen Rändern ohnehin geringer ist, als im mittleren Bereich.

Die Aufgabe wird in ihrem dritten Aspekt durch eine, nicht beanspruchte, Verlegehilfe für Gelegebänder eines Gurtes einer Rotorblatthalbschale eines Rotorblattes einer Windenergieanlage gelöst mit einem Anschlag für Gelegebänder und einer Haltevorrichtung, mit der der Anschlag gegenüber dem zu verlegenden Gelegeband während des Verlegen positionsfest bleibt und mit einer Höhenverstelleinrichtung und einer Breitenverstelleinrichtung des Anschlags gegenüber dem Rotorblatt.

Die Verlegehilfe umfasst einen Anschlag, der sich vorzugsweise vollständig über die Längsausdehnung des Rotorblattes bzw. der Rotorblatthalbschale erstreckt. Rotorblätter werden bevorzugterweise so hergestellt, dass zunächst zwei Rotorblatthalbschalen in Herstellungsformen ausgebildet werden. In die Rotorblatthalbschalen können die Gurte einlaminiert werden. Es ist jedoch auch denkbar, dass Gurtsteggruppen in die Rotorblatthalbschalen einlaminiert werden. Da der erfindungsgemäße Gurt mehrere Gelegebänder aufweisen kann, die in der Breite unterschiedlich sind, ist es notwendig, die Gelegebänder in Längsrichtung so zu verlegen, dass sich ihr seitlicher relativer Versatz in Längsrichtung konstant bleibt. Dazu kann der Anschlag der Verlegehilfe positionsfest zur Rotorblatthalbschale und den darin zu verlegenden Gelegebändern angeordnet werden, und das zugehörige Gelegeband wird mit seiner Seite entlang des Anschlags bündig verlegt.

Damit die Verlegehilfe auch zur Verlegung weiterer Gelegebänder, die schmaler und/oder breiter und weiter innenseitig bzw. außenseitig angeordnet sind, verwendet werden kann, ist der Anschlag vorzugsweise in seiner Höhe gegenüber der Rotorblattinnenwandung bzw. der Breite in Querrichtung verstellbar. Somit kann der Anschlag durch Vergrößerung der Höhe gegenüber der Rotorblattinnenwandung auch für weiter innenseitig angeordnete Gelegebänder verwendet werden und durch Verstellung des Anschlags in Querrichtung mittels einer breiten Verstelleinrichtung kann der Anschlag auch für schmale bzw. breitere Gelegebänder verwendet werden.

Die Verlegehilfe kann auch einen in Längsrichtung kürzeren Anschlag aufweisen. Die Verlegehilfe weist dann vorzugsweise zusätzlich eine Verfahrvorrichtung in Längsrichtung auf.

In einer besonders bevorzugten Ausführungsform der Verlegehilfe ist die Halteeinrichtung als Bügel ausgebildet, der zum einen fest mit dem Anschlag und zum anderen schwenkbar mit einer Herstellungsform für diese Rotorblatthalbschale verbunden ist. Dadurch ist es möglich, beispielsweise zunächst die Rotorblatthalbschale im Laminierverfahren herzustellen, dann den Anschlag mittels des Bügels in die Rotorblatthalbschale hinein zu schwenken und in nachfolgenden Schritten Gelegebänder des Hauptgurtes und/oder die Nebengurtes auf die Innenwandung der Rotorblatthalbschale mit Hilfe der Verlegehilfe aufzulegen und dann überzulaminieren.

Günstigerweise weist die Verlegehilfe einen Fuß auf, mit dem der in die Rotorblattschale verschwenkte Anschlag an der Innenwandung der Rotorblatthalbschale aufgestützt werden kann. Günstigerweise weist die Höhenverstellvorrichtung eine Ausziehvorrichtung für den wenigstens einen Fuß auf.

Die Erfindung wird anhand von Ausführungsbeispielen in sechs Figuren beschrieben. Dabei zeigen:
- Fig. 1: einen Querschnitt eines herkömmlichen Rotorblattes in einer ersten Ausführungsform,
- Fig. 2: einen Querschnitt eines herkömmlichen Rotorblattes in einer zweiten Ausführungsform,
- Fig. 3: einen Querschnitt eines erfindungsgemäßen Rotorblattes,
- Fig. 4: eine Draufsicht auf eine untere Halbschale eines erfindungsgemäßen Rotorblattes,
- Fig. 5: eine perspektivische Ansicht der Stufe in Fig. 4,
- Fig. 6: eine, nicht beanspruchte, Verlegehilfe mit einem verstellbaren Anschlag.

Die Figuren stellen die Erfindung in schematischer Weise dar. Es sind vielfältige Ausführungsformen denkbar. Die in den Figuren dargestellten Zeichnungen sind weder maßgetreu noch maßstabsgetreu.

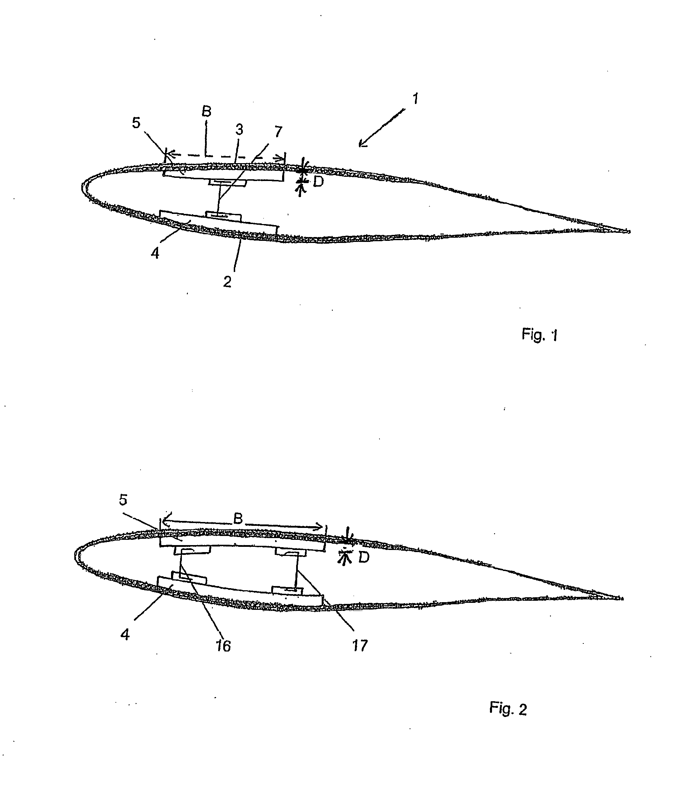

Der in Fig. 1 dargestellte Querschnitt eines herkömmlichen Rotorblattes 1 zeigt einen im Wesentlichen hohlen Rotorblattinnenraum, der durch Aneinanderfügen einer unteren Rotorblatthalbschale 2 und einer oberen Rotorblatthalbschale 3 gebildet wird. Während des Herstellungsverfahrens des Rotorblattes 1 werden die Rotorblatthalbschalen 2, 3 zunächst separat in Laminierverfahren hergestellt. Dazu ist für jede der beiden Rotorblatthalbschalen 2, 3 eine eigene Herstellungsform vorgesehen, in der die zugehörige Rotorblatthalbschale 2, 3 vorzugsweise durch Übereinanderlegen von Gelegebändern und Überlaminieren der aufeinander gelegten Gelegebänder ausgeformt wird. Als Laminierverfahren kann insbesondere die Vakuuminfusion angewendet werden.

Rotorblätter 1 moderner Windenergieanlagen können Längen von 60 Metern oder mehr aufweisen. Entsprechend groß sind auch die zur Herstellung der Rotorblatthalbschalen 2, 3 verwendeten Herstellungsformen. Jede der beiden Rotorblatthalbschalen 2, 3 kann in einem Stück durch Laminieren hergestellt werden, indem Gelegebänder über die gesamte Rotorblattlänge in der Herstellungsform ausgelegt werden. Es ist jedoch auch denkbar, zunächst Abschnitte der Rotorblatthalbschalen 2, 3 herzustellen und diese anschließend durch Laminiertechniken miteinander zu verbinden.

In die Rotorblatthalbschalen 2, 3 werden während des Herstellungsprozesses Gurte 4, 5 in Längsrichtung L der Rotorblatthalbschalen 2, 3 auf die Innenwandung jeder der Rotorblatthalbschalen 2, 3 auflaminiert. Der untere Hauptgurt 4 und der obere Hauptgurt 5 verlaufen vorzugsweise gradlinig in Längsrichtung L der zugeordneten Rotorblatthalbschale 2, 3. Die in Fig. 1 dargestellten Gurte 4, 5 sind so genannte Hauptgurte 4, 5, die vorzugsweise im bauchigsten Bereich des Rotorblattquerschnittes angeordnet sind. Die beiden Hauptgurte 4, 5 liegen sich im Rotorblattinnenraum gegenüber und sind mit einem senkrecht von den beiden Hauptgurten 4, 5 jeweils abstehenden Steg 7 miteinander belastungsfest und dauerhaft verbunden. Der in Fig. 1 dargestellte Steg 7 ist ein Doppel-T Steg.

Der Steg 7 selber kann ebenfalls in Laminierverfahren aus Gelegebändern hergestellt werden. Zum einen ist es möglich, während der Herstellung einer Rotorblatthalbschale 2, 3 den Doppel-T Steg 7 auf den in die untere Rotorblatthalbschale 2 laminierten unteren Hauptgurt 4 aufzulaminieren, zum anderen ist es denkbar, den unteren Hauptgurt 4 zusammen mit dem Doppel-T Steg 7 als Baugruppe separat herzustellen und den unteren Hauptgurt 4 mit Doppel-T Steg 7 als Baugruppe anschließend auf die Innenwandung der unteren Rotorblatthalbschale 2 aufzulaminieren.

Die beiden in Fig. 1 dargestellten Hauptgurte, der untere Hauptgurt 4 und der obere Hauptgurt 5, die in der jeweiligen unteren Rotorblatthalbschale 2 und der oberen Rotorblatthalbschale 3 auflaminiert sind, weisen über ihre gesamte Längsausdehnung in Längsrichtung L des Rotorblattes 1 eine gleiche Gurtbreite B auf. Allerdings nimmt eine Gurtdicke D - in Fig. 1 ist das die vertikale Ausdehnung des unteren und oberen Hauptgurtes 4, 5 von einer Rotorblattwurzel 11 - ausgehend in Richtung einer Rotorblattspitze 12 in Längsrichtung L des Rotorblattes 1 ab. Die Abnahme der Gurtdicke D muss nicht notwendigerweise kontinuierlich über die gesamte Längsausdehnung erfolgen, sondern es können im Rotorblattabschnitt Verdickungen der Hauptgurte 4, 5 vorgesehen sein. Die Abnahme der Gurtdicke D in Längsrichtung L des Rotorblattes 1 ist als durchschnittliche Abnahme zu verstehen.

Üblicherweise werden Hauptgurte 4, 5 durch Übereinanderlegen mehrerer Gelegebänder hergestellt. Das außenseitigste Gelegeband, d.h. das Gelegeband, das direkt auf der Innenwandung der unteren Rotorblatthalbschale 2, 3 aufgelegt wird, erstreckt sich vom äußeren Rand der Rotorblattwurzel 11 in Längsrichtung L bis zur Rotorblattspitze 12. Unter ,innen' und 'außen' werden hier Positionsangaben von Rotorblattabschnitten oder Bauteilen verstanden in Bezug auf die Position des montierten Rotorblattes an der Windenergieanlage. Innere Rotorblattänschnitte sind demnach der Rotorblattwurzel 11 benachbarte Rotorblattanschnitte und äußere Rotorblattanschnitte sind der Rotorblattspitze 12 benachbart.

Die Gelegebänder laufen sukzessive ausgehend von der Rotorblattwurzel 11 nach außen, ausgehend von dem innenseitigsten Gelegeband, hin aus. Unter 'innenseitig' und 'außenseitig' wird im Weiteren die Bezugnahme auf den Rotorblattinnenraum bzw. die Rotorblattaußenwandung verstanden. Das innenseitigste Gelegeband der beiden Hauptgurte 4, 5 läuft ausgehend von der Rotorblattwurzel 11 nach außen als erstes aus, das zweite Gelegeband läuft als zweites aus und so weiter, während das außenseitigste Gelegeband bis fast in die äußerste Rotorblattspitze 12 ausgelegt ist.. Damit nimmt die Dicke D des unteren und des oberen Hauptgurtes 4, 5 ausgehend von der Rotorblattwurzel 11 zur Rotorblattspitze 13 ab, wobei jedoch die Breite B entlang der Längsausdehnung der Gurte 4, 5 gleich bleibt.

Um eine besonders große Effektivität der Hauptgurte 4, 5 zu erzielen, sind die Hauptgurte 4, 5 möglichst breit ausgebildet.

In einer zweiten herkömmlichen Ausführungsform eines Querschnitts eines Rotorblattes 1 sind die beiden Hauptgurte 4, 5 durch zwei U-Profilstege 16, 17 miteinander positionsfest und dauerhaft verbunden. Ansonsten ist das Herstellungsverfahren sowie der prinzipielle Aufbau von Gurten 4, 5 und Stegen 7, 16, 17 in Fig. 1 und Fig. 2 der gleiche.

Nachteilig an dem herkömmlichen oberen und unteren Hauptgurt 4, 5 in Fig. 1, ist die Tatsache, dass die Breite B der beiden Hauptgurte 4, 5 entlang der Hauptgurte 4, 5 konstant ist. Bei den Hauptgurten 4, 5 in Fig. 2 besteht die Gefahr, dass die beiden Hauptgurte 4, 5 im Querschnitt mittig besonders beulgefährdet sind. In äußeren Rotorblattabschnitten sind die Hauptgurte 4, 5 auch noch besonders dünn und es besteht besonders hier die erhöhte Gefahr, dass sie zwischen den beiden U-Profilstegen 15, 17 ausbeulen.

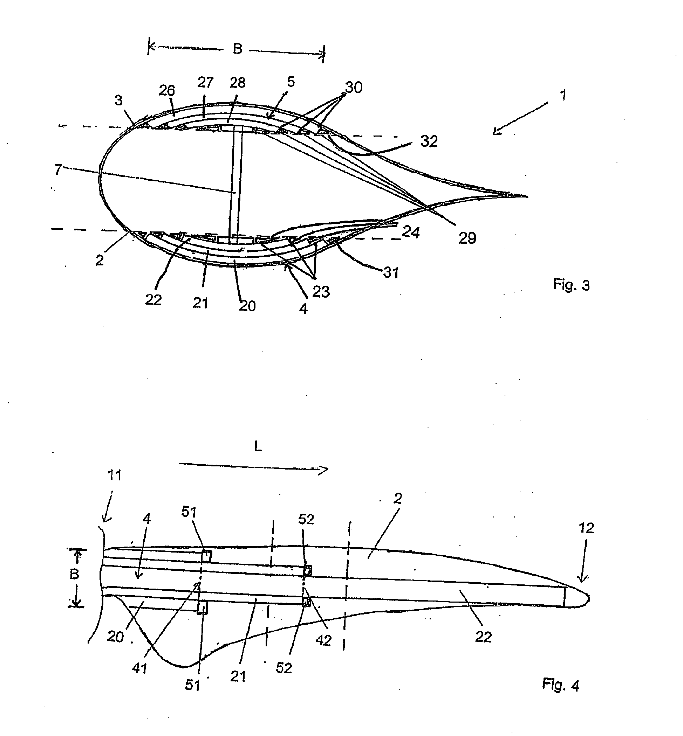

Fig. 3 zeigt den Querschnitt eines erfindungsgemäßen Rotorblattes 1. Dabei ist das Rotorblatt 1 viel bauchiger dargestellt als es der Realität entspricht. Der Querschnitt des erfindungsgemäßen Rotorblattes 1 entspricht im Wesentlichen auch den in den Fig. 1, 2 dargestellten Rotorblattquerschnitten. Der obere und der untere Hauptgurt 4, 5 sind weiterhin, wie dem Stand der Technik bekannt, auf die obere und untere Rotorblatthalbschale 2, 3 auflaminiert. Jeder der beiden Hauptgurte 4, 5 besteht dabei aus übereinander gelegten Gelegebändern 20, 21, 22, 26, 27, 28. Allerdings sind die Gelegebänder 20, 21, 22, 26, 27, 28 in ihrer jeweiligen Breite B, also ihrer jeweiligen Ausdehnung in Querrichtung des Rotorblattes 1 unterschiedlich. Die außenseitigen oberen und unteren 20, 26 Gelegebänder sind breit, während die innenseitigen oberen und unteren Gelegebänder 22, 28 schmaler als die außenseitigen oberen und unteren 20, 26 Gelegebänder sind. Fig. 3 zeigt den unteren und den oberen Hauptgurt 4, 5 durch jeweils drei untere Gelegebänder 20, 21, 22 bzw. drei obere Gelegebänder 26, 27, 28 ausgebildet. Die unteren und die oberen Gelegebänder 20, 21, 22 bzw. 26, 27, 28 nehmen in ihrer Breite kontinuierlich von den außenseitigen Gelegebebändern 20, 26 zum innenseitigen Gelegeband 22 bzw. 28 ab. Es ist jedoch auch denkbar, insbesondere aufeinander folgende Gelegebänder gleich breit auszubilden.

Die in Querrichtung mittleren Bereiche der beiden Hauptgurte 4, 5 sind mit einem Doppel-T Steg 7 miteinander verbunden.

In Querrichtung entstehen Stufen zwischen den einzelnen, aufeinander folgenden Gelegebändern. Die Stufen können durch seitliches Anlegen von abgeschrägten Balsaholzstücken (nicht eingezeichnet), vorzugsweise sich in Längsrichtung L erstreckenden Balsaholzleisten, geglättet werden. Aufgrund der bauchigen Ausbildung der beiden Rotorblatthalbschalen 2, 3 kann auf diese Weise im Innenraum der beiden Rotorblatthalbschalen 2, 3 eine ebene, gut begehbare Fläche 31, 32 durch die innenseitigen Wandungen der beiden Hauptgurte 4, 5 ausgebildet werden. Die ebene Ausbildung der innenseitigen Wandungen ist in Fig. 3 durch zwei gestrichelte Linien dargestellt.

Fig. 4 zeigt die untere Rotorhalbschale 2 in Fig. 3 in einer Draufsicht. Die obere Rotorhalbschale 3 ist abgenommen. Fig. 4 zeigt, dass der untere Hauptgurt 4 von der Rotorblattwurzel 11 zur Rotorblattspitze 13 hin in Fig. 4 durch zwei Stufen 41, 42 in Längsrichtung L der Rotorblatthalbschale 2 schmaler wird. Grundsätzlich sind jedoch in Längsrichtung L eine Vielzahl von Stufen 41, 42 denkbar, die der um eins verminderten Anzahl an Gelegebändern 20, 21, 22 des unteren Hautgurtes 4 entsprechen. Fig. 4 zeigt das innenseitigste Gelegeband 20, das in Längsrichtung L am kürzesten und Querrichtung am breitesten im Vergleich zu den übrigen Gelegebändern 21, 22 des untersten Gurtes 4 ausgebildet ist.

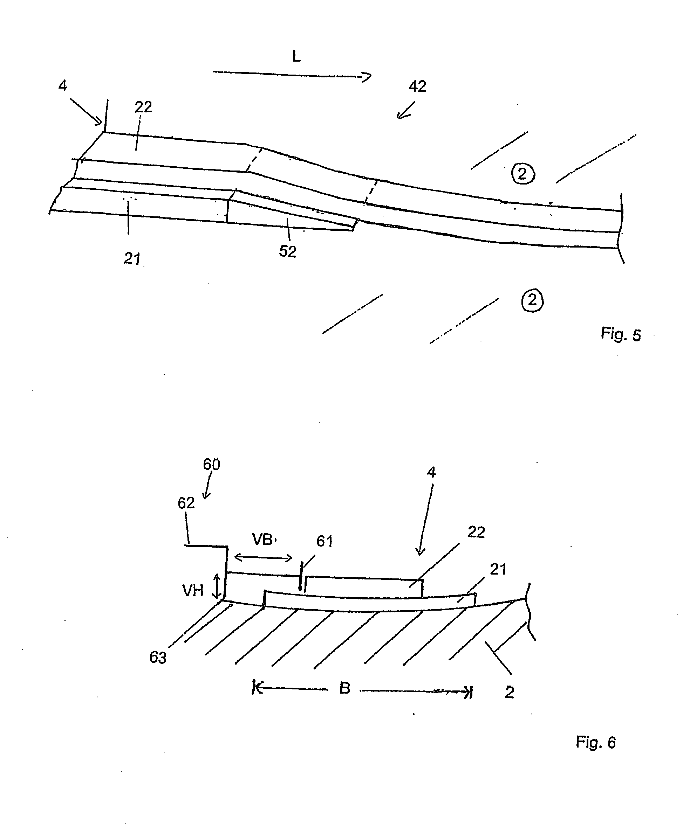

Fig. 4 zeigt das mittlere Gelegeband 21, das in Längsrichtung L bis etwa zur Mitte der Rotorblatthalbschale 2 verläuft, dort endet und hinsichtlich der Breite B zwischen dem innenseitigsten und außenseitigsten Gelegeband 20 bzw. 22 angeordnet ist. Das innenseitigste Gelegeband 22 ist am schmalsten von den unteren Gelegebänder 20, 21, 22 ausgebildet, es erstreckt sich von der Rotorblattwurzel 11 bis fast vollständig in die Rotorblattspitze 13. Fig. 4 zeigt, dass die Stufen 41, 42 in Längsrichtung L ebenfalls durch Balsaholzstückchen 51, 52 abgeschrägt werden können.
Besonders beulgefährdet ist der Hauptgurt 4 im Abschnitt der beiden Stufen 41, 42. Die äußere Stufe 42 ist in Fig. 5 noch einmal in einer perspektivischen Ansicht dargestellt.

Im Abschnitt der äußeren Stufe 42 sind nur noch zwei Gelegebänder 21, 22 vorhanden. Die äußere Stufe 42 wird durch Beendigung des mittleren unteren Gelegebandes 21 und Absenken des innenseitigsten Gelegebandes 22 zur Rotorblattinnenwandung ausgeformt. Der untere Hauptgurt 4 weist drei Gelegebänder 20, 21, 22 auf. Das untere außenseitige Gelegeband 20 ist das breiteste und kürzeste der drei Gelegebänder 20, 21, 22. Ein unteres mittleres Gelegeband 21 ist schmaler und länger als das untere außenseitige Gelegeband 20 aber breiter und kürzer als das innenseitige untere Gelegeband 22.

Weil das mittlere Gelegeband 21 Lage in einem in Längsrichtung L mittleren Rotorblattabschnitt endet und durch die Beendigung eine Stufe 42 ausbildet, muss das innenseitige Gelegeband 22 über die Stufe 42 geführt werden. Dieses innenseitige Gelegeband 22 ist im Abschnitt der Stufe 42 beulgefährdet. Fig. 5 zeigt, dass das innenseitige Gelegeband 22 über durch einen angeschrägten Balsaholzkeil 52 ohne Knick und unter vollständigem Kontakt mit der innenseitigen Oberfläche des Balsaholzkeils 52 auf die Innenwandung der Rotorblatthalbschale 2 abgesenkt wird. Der Balsaholzkeil 52 ragt günstigerweise über die Breite B des innenseitigen Gelegebandes 22 seitlich hinaus und schließt damit auch das Ende des mittleren Gelegebandes 21 ab und führt das mittlere Gelegeband 21 glatt zur Innenwandung der Rotorblatthalbschale 2.

In Fig. 6 ist eine Verlegehilfe 60 mit einem ein breiten- und höhenverstellbaren Anschlag 61 dargestellt. Die Verlegehilfe 60 ist ein Werkzeug mit dem die Gelegebänder 21, 22 während des Herstellungsverfahrens des unteren Hauptgurtes 4 auf die Rotorblattinnenwandungen der unteren Rotorblatthalbschale 2 aufgebracht werden können. Die Verlegehilfe 60 kann zum Verlegen aller Gelegebänder 20, 21, 22 sowohl des unteren Hauptgurtes 4 als auch des oberen Hautgurtes 5 verwendet werden. Ebenso ist die Anwendung auf alle Gelegebänder etwaiger Nebengurte möglich.

Die einzelnen Gelegebänder 21, 22 müssen über mehrere Meter in Längsrichtung L gerade und in ihrem Versatz zu den Rändern der bereits aufgebrachten Gelegebänder 21, 22 gleich bleibend verlegt werden. Diese Art der Verlegung wird durch die prinzipiell dargestellte Verlegehilfe 60 in Fig. 6 ermöglicht. Der Anschlag 61 kann sich dabei über die gesamte Längsausdehnung der Rotorblatthalbschale 2 erstrecken und beispielsweise über einen Bügel 62 an dem Rand oder Gelenk der Herstellungsform der Rotorblatthalbschale 2 schwenkbar angeordnet sein. Nach der Herstellung der eigentlichen Rotorblatthalbschale 2, kann die Verlegehilfe 60 an dem Bügel 62 in die Rotorblatthalbschale 2 hineinverschwenkt werden, bis in Längsrichtung L entlang der Verlegehilfe 60 angeordnete Füße 63 auf der Innenwandung der Rotorblatthalbschale 2 aufsetzen. Die Höhe des Anschlags 61 über der Rotorblatthalbschale 2 ist mittels einer Höhenverstelleinrichtung VH verstellbar, z.B. indem die Füße 63 gegenüber Armen an dem der Anschlag 61 angeordnet ist, ausziehbar sind. Der Anschlag 61 der Verlegehilfe 60 ist in seiner breite mittels einer Breitenverstelleinrichtung VB verstellbar. Um der unterschiedlichen Bahnbreite B der Gelegebänder 21,22 Rechnung tragen zu können.

### Bezugszeichenliste:

- 1: Rotorblatt
- 2: untere Rotorblatthalbschale
- 3: obere Rotorblatthalbschale
- 4: unterer Hauptgurt
- 5: oberer Hauptgurt
- 7: Steg
- 11: Rotorblattwurzel
- 12: Rotorblattspitze
- 16: U-profilsteg
- 17: U-Profilsteg
- 20: Gelegeband
- 21: Gelegeband
- 22: Gelegeband
- 23: Längsstufe
- 24: längs verlaufender Balsaholzkeil
- 26: Gelegeband
- 27: Gelegeband
- 28: Gelegeband
- 29: Längsstufe
- 30: längs verlaufender Balsaholzkeil
- 31: begehbare Fläche
- 32: begehbare Fläche
- 41: Querstufe
- 42: Querstufe
- 51: quer verlaufender Balsaholzkeil
- 52: quer verlaufender Balsaholzkeil
- 60: Verlegehilfe
- 61: Anschlag
- 62: Bügel
- 63: Füße
- B: Gurtbreite, Bahnbreite der Gelegelage
- D: Gurtdicke
- VH: Höheverstelleinrichtung des Anschlags
- VB: Breiteverstelleinrichtung des Anschlags
- L: Längsrichtung

## Patentansprüche

1. Rotorblatt für eine Windenergieanlage mit wenigstens einem in Längsrichtung (L) des Rotorblattes verlaufenden Gurt (4, 5), wobei eine Breite (B) des Gurtes (4, 5) entlang der Längsrichtung (L) abnimmt, **dadurch gekennzeichnet, dass** der wenigstens eine Gurt (4, 5) in einem Querschnitt des Rotorblattes (1) übereinander angeordnete, in Längsrichtung (L) unterschiedlich lange und unterschiedlich breite Gelegebänder (20, 21, 22, 26, 27, 28) aufweist und die Gelegebänder (20, 21, 22, 26, 27, 28) in ihrer Breite umso schmaler ausgebildet sind, je länger sie in Längsrichtung (L) von der Rotorblattwurzel (11) abgehen und außenseitige Gelegebänder (20, 21, 26, 27) des wenigstens einen Gurtes (4, 5) kürzer als innenseitig des außenseitigen Gelegebandes (20, 21, 26, 27) angeordnete Gelegebänder (21, 22, 27, 28) des Gurtes (4, 5) sind, innenseitig an einem außenseitigen Gelegeband (20, 21, 26, 27) des wenigstens einen Gurtes (4, 5) angeordnete Gelegebänder (21, 22, 27, 28) schmaler, vorzugsweise abschnittsweise oder über ihre im Wesentlichen ganze Ausdehnung in Längsrichtung (L) schmaler als das außenseitige Gelegeband (20, 21, 26, 27) des Gurtes (4, 5) sind.

2. Rotorblatt nach Anspruch 1,
**dadurch gekennzeichnet, dass** die Breite des wenigstens einen Gurtes in Längsrichtung (L) stufenweise abnimmt.

3. Rotorblatt nach Anspruch 1,
**dadurch gekennzeichnet, dass** jedes innenseitig eines außenseitigen Gelegebandes (20, 21, 26, 27) benachbarte Gelegeband (21, 22, 27, 28) länger als das außenseitige Gelegeband (20, 21, 26, 27) ist.

4. Rotorblatt nach wenigstens einem der vorstehenden Ansprüche,
**dadurch gekennzeichnet, dass** ein quer verlaufendes Ende eines in Längsrichtung (L) beendeten Gelegebandes (20, 21, 22, 26, 27, 28) eine Querstufe (41, 42) bildet, in die ein glättender, quer verlaufender, vorzugsweise keilförmiger Abschluss (51, 52) eingeformt ist, der vorzugsweise der Höhe und/oder Breite des beendeten Gelegebandes (20, 21, 22, 26, 27, 28) entspricht.

5. Rotorblatt nach wenigstens einem der vorstehenden Ansprüche,
**dadurch gekennzeichnet, dass** ein in Längsrichtung (L) verlaufendes Ende eines in Querrichtung beendeten Gelegebandes (20, 21, 22, 26, 27, 28) eine Längsstufe (23, 29) bildet, in die ein glättender, in Längsrichtung (L) verlaufender, vorzugsweise keilförmig ausgeformter Abschluss (24, 30) eingeformt ist, der vorzugsweise der Höhe und/oder Breite des beendeten Gelegebandes (20, 21, 22, 26, 27, 28) entspricht.

6. Rotorblatt nach wenigstens einem der Ansprüche 4 oder 5,
**dadurch gekennzeichnet, dass** der in Längsrichtung (L) verlaufende Abschluss (24, 30) und/oder der quer verlaufende Abschluss (51, 52) Balsaholz aufweist.

7. Rotorblatt nach wenigstens einem der vorstehenden Ansprüche,
**dadurch gekennzeichnet, dass** jedes einem innenseitigen Gelegeband (21, 22, 27, 28) außenseitig benachbarte Gelegeband (20, 21, 27, 28) breiter und kürzer als das innenseitige Gelegeband (21, 22, 27, 28) ist.

8. Verfahren zur Herstellung eines Rotorblattes (1) nach einem der vorstehenden Ansprüche, bei dem wenigstens ein Gurt (4, 5) mit seiner in Längsrichtung (L) abnehmenden Breite (B) auf eine Rotorblattinnenwandung aufgebracht wird, **dadurch gekennzeichnet, dass** die Gelegebänder (20, 21, 22, 26, 27, 28) mit unterschiedlicher Breite (B) und/oder unterschiedlicher Länge übereinander geschichtet werden und derart gewählt werden, dass je länger die Gelegebänder (20, 21, 22, 26, 27, 28) sich in Längsrichtung (L) erstrecken, desto schmaler die Gelegebänder (20, 21, 22, 26, 27, 28) werden.

9. Verfahren nach Anspruch 8,
**dadurch gekennzeichnet, dass** die Enden der in Längsrichtung (L) beendeten Gelegebänder (20, 21, 22, 26, 27, 28) Querstufen (41, 42) ausbilden, an die quer verlaufende Abschlüsse (51, 52) angefügt werden und die geglättet werden und/oder Enden der in Querrichtung beendeten Gelegebänder (20, 21, 22, 26, 27, 28) Längsstufen (23, 29) ausbilden, an die in Längsrichtung (L) verlaufende Abschlüsse (24, 30) angefügt werden und die geglättet, insbesondere überlaminiert werden und für die vorzugsweise Balsaholzkeile (24, 30, 51, 52) als Abschlüsse (24, 30, 51, 52) verwendet werden.

10. Verfahren nach einem der Ansprüche 8 oder 9,
**dadurch gekennzeichnet, dass** die innenseitigen Gelegebänder (21, 22, 27, 28) schmaler als benachbarte außenseitige Gelegebänder (20, 21, 26, 27) gewählt werden und die Breitenabnahme so bestimmt wird, dass unter Berücksichtigung einer Krümmung der Rotorblattinnenwandung eine im Wesentlichen ebene und gerade innenseitige Gurtoberfläche ausgebildet wird.

## Claims

1. A rotor blade for a wind energy system with at least one flange (4, 5) running in a longitudinal direction (L) of the rotor blade, whereby a width (B) of the flange (4,5) decreases along the longitudinal direction (L) **characterized in that** the at least one flange (4, 5) has superposed and differently wide positioning strips (20, 21, 22, 26, 27, 28) with different lengths in the longitudinal direction (L), and that the positioning strips (20, 21, 22, 26, 27, 28) are designed narrower in their width the further they are removed in the longitudinal direction (L) from the rotor blade root (11) and that outside positioning strips (20, 21, 26, 27) of the at least one flange (4, 5) are shorter than positioning strips (21, 22, 27, 28) of the flange (4, 5) which are arranged inside the outside positioning strips (20, 21, 26, 27), that positioning strips (21, 22, 27, 28) arranged on the inside on an outside positioning strip (20, 21, 26, 27) of the at least one flange (4, 5) are narrower, preferably sectionally or substantially over their entire extent in the longitudinal direction (L) than the outside positioning strip (20, 21, 26, 27) of the flange (4, 5).

2. The rotor blade according to Claim 1,
**characterized in that** the width of the at least one flange gradually decreases in the longitudinal direction (L).

3. The rotor blade according to Claim 1,
**characterized in that** each positioning strip (20, 21, 26, 27) adjacent on the inside of an outside positioning strip (20, 21, 26, 27) is longer than the outside positioning strip (20, 21, 26, 27).

4. The rotor blade according to at least one of the previous claims,
**characterized in that** a transversely running end of a positioning strip (20, 21, 22, 26, 27, 28) ended in the longitudinal direction (L) forms a transverse increment (41, 42) into which a smoothing, transversely running and preferably wedge-shaped closure (51, 52) is formed that preferably corresponds to the height and/or width of the ended positioning strip (20, 21, 22, 26, 27, 28).

5. The rotor blade according to at least one of the previous claims, **characterized in that** a longitudinally running end of a positioning strip (20, 21, 22, 26, 27, 28) ended in a transverse direction forms a longitudinal increment (23, 29) into which a smoothing closure (24, 30) running in the longitudinal direction (L) and preferably formed like a wedge is formed that preferably corresponds to the height and/or width of the ended positioning strip (20, 21, 22, 26, 27, 28).

6. The rotor blade according to at least one of Claims 4 or 5,
**characterized in that** the closure (24, 30) running in the longitudinal direction (L) and/or the transversely running closure (51, 52) comprise/s balsa wood.

7. The rotor blade according to at least one of the previous claims, **characterized in that** each positioning strip (20, 21, 27, 28) adjacent on the outside to an inside positioning strip (21, 22, 27, 28) is wider and shorter than the inside positioning strip (21, 22, 27, 28).

8. A process for producing a rotor blade (1) according to one of the previous claims, in which at least one flange (4, 5) with its width (B) decreasing in the longitudinal direction (L) is applied onto a rotor blade inner wall,
**characterized in that** the positioning strips (20, 21, 22, 26, 27, 28) with different widths (B) and/or different lengths are superposed over each other and selected in such a manner that the longer the positioning strips (20, 21, 22, 26, 27, 28) extend in the longitudinal direction (L) the narrower the positioning strips (20, 21, 22, 26, 27, 28) become.

9. The process according to Claim 8, **characterized in that** the ends of the positioning strips (20, 21, 22, 26, 27, 28) ending in the longitudinal direction (L) form transverse increments (41, 42) onto which transversely running closures (51, 52) are attached and that are smoothed, and/or that ends of the positioning strips (20, 21, 22, 26, 27, 28) ended in the transverse direction form longitudinal increments (23, 29) on which closures (24, 30) running in the longitudinal direction (L) are attached and which are smoothed, in particular laminated over, and for which preferably balsa wood wedges (24, 30, 51, 52) are used as closures (24, 30, 51, 52).

10. The process according to one of Claims 8 or 9, **characterized in that** the inside positioning strips (21, 22, 27, 28) are selected to be narrower than adjacent outside positioning strips (20, 21, 26, 27) and that the decrease in width is determined in such a manner that a substantially level and straight inside flange surface is formed, taking into consideration a curvature of the rotor blade inner wall.

## Revendications

1. Pale de rotor pour une éolienne avec au moins une membrure (4, 5) dans la direction longitudinale (L) de la pale de rotor, cependant qu'une largeur (B) de la membrure (4, 5) diminue dans la direction longitudinale (L),
**caractérisée en ce que** la membrure qui existe au moins (4, 5) présente dans une section transversale de la pale de rotor (1) des bandes de grille (20, 21, 22, 26, 27, 28) superposées, de différentes longueurs et de différentes largeurs dans la direction longitudinale (L) et que les bandes de grille (20, 21, 22, 26. 27. 28) sont configurées d'autant plus étroites dans leur largeur qu'elles partent sur une longueur plus longue dans la direction longitudinale (L) de la racine de la pale de rotor (11) et que des bandes de grille du côté extérieur (20, 21, 26, 27) de la membrure qui existe au moins (4, 5) sont plus courtes que des bandes de grille (20, 22, 27, 28) de la membrure (4,5) qui sont placées sur le côté intérieur de la bande de grille du côté extérieur (20, 21, 26, 27), que des bandes de grille (21, 22, 27, 28) placées sur le coté intérieur sur une bande de grille du côté extérieur (20, 21, 26, 27) de la membrure qui existe au moins (4, 5) sont plus étroites, de préférence par sections ou sont plus étroites sur leur extension substantiellement totale dans la direction longitudinale (L) que la bande de grille du côté extérieur (20, 21, 26, 27) de la membrure (4, 5).

2. Pale de rotor selon la revendication 1,
**caractérisée en ce que** la largeur de la membrure qui existe au moins diminue graduellement dans la direction longitudinale (L).

3. Pale de rotor selon la revendication 1,
**caractérisée en ce que** chaque bande de grille (21, 22, 27, 28) voisine sur le côté intérieur d'une bande de grille du côté extérieur (20, 21, 26, 27) est plus longue que la bande de grille du côté extérieur (20, 21, 26, 27).

4. Pale de rotor selon au moins l'une des revendications précédentes,
**caractérisée en ce qu'**une extrémité dans le sens transversal d'une bande de grille (20, 21, 22, 26, 27, 28) qui se termine dans la direction longitudinale (L) forme un degré transversal (41, 42) dans lequel est moulée une terminaison égalisante, transversale, de préférence en forme de coin (51, 52), qui correspond de préférence à la hauteur et/ou à la largeur de la bande de grille terminée (20, 21, 22, 26, 27, 28).

5. Pale de rotor selon au moins l'une des revendications précédentes,
**caractérisée en ce qu'**une extrémité dans la direction longitudinale (L) d'une bande de grille qui se termine dans le sens transversal (20, 21, 22, 26, 27, 28) forme un degré longitudinal (23, 29) dans lequel est moulée une terminaison égalisante, dans la direction longitudinale (L), formée de préférence en forme de coin (24, 30), qui correspond de préférence à la hauteur et/ou à la largeur de la bande de grille terminée (20, 21, 22, 26, 27, 28).

6. Pale de rotor selon au moins l'une des revendications 4 ou 5,
**caractérisée en ce que** la terminaison (24, 30) dans la direction longitudinale (L) et/ou la terminaison transversale (51, 52) présente du balsa.

7. Pale de rotor selon au moins l'une des revendications précédentes,
**caractérisée en ce que** chaque bande de grille (20, 21, 27, 28) voisine sur le côté extérieur d'une bande de grille du côté intérieur (21, 22, 27, 28) est plus large et plus courte que la bande de grille du côté intérieur (21, 22, 27, 28).

8. Procédé pour la fabrication d'une pale de rotor (1) selon l'une des revendications précédentes pour lequel au moins une membrure (4, 5) avec sa largeur (B) qui diminue dans la direction longitudinale (L) est appliquée sur une paroi intérieure de pale de rotor, **caractérisé en ce que** les bandes de grille (20, 21, 22, 26, 27, 28) avec une largeur différente (B) et/ou une longueur différente sont empilées les unes sur les autres et sont choisies telles que plus les bandes de grille (20, 21, 22, 26, 27, 28) s'étendent en longueur dans la direction longitudinale (L), plus les bandes de grille (20, 21, 22, 26, 27, 28) deviennent étroites.

9. Procédé selon la revendication 8,
**caractérisé en ce que** les extrémités des bandes de grille (20, 21, 22, 26, 27, 28) qui se terminent dans la direction longitudinale (L) forment des degrés transversaux (41, 42) auxquels des terminaisons transversales (51, 52) sont jointes et qui sont égalisées et/ou les extrémités des bandes de grille qui se terminent dans le sens transversal (20, 21, 22, 26, 27, 28) forment des degrés longitudinaux (23, 29) auxquels des terminaisons dans la direction longitudinale (L) sont jointes et qui sont égalisées, en particulier qui sont laminées dessus et pour lesquelles de préférence des coins en balsa (24, 30, 51, 52) sont utilisés comme terminaisons.

10. Procédé selon l'une des revendications 8 ou 9,
**caractérisé en ce que** les bandes de grille du côté de l'intérieur (21, 22, 27, 28) sont choisies plus étroites que des bandes de grilles du côté extérieur voisines (20, 21, 26, 27) et que la diminution de la largeur est déterminée de telle manière qu'en tenant compte d'une courbure de la paroi intérieure de la pale de rotor il est formé une surface de membrure du côté intérieur substantiellement plate et droite.
